# EUROPEAN PATENT APPLICATION

(11) **EP 2 487 071 A1**
(43) Date of publication of application: **15.08.2012**
(21) Application number: 10822026.0
(22) Date of filing: 05.10.2010
(51) Int. Cl.: B60R 7/06, B60R 11/02

(54) **LID OPENING AND CLOSING DEVICE**

(30) Priority: 08.10.2009 JP 2009234375
(71) Applicant: Nifco Inc., Yokohama-shi, Kanagawa 244-8522 (JP)
(72) Inventor: YANAGITA, Yosuke, Yokohama-shi Kanagawa 244-8522 (JP); OHGO, Masahide, Wako-shi Saitama 351-0193 (JP)
(74) Representative: Gassner, Wolfgang
(86) International application number: PCT/JP2010/067489
(87) International publication number: WO 2011/043356

(57) **Abstract**

A cover opening-closing apparatus includes a base member having a guide groove, a cover member that is provided with a guide cylinder part disposed so as to be freely movable in the guide groove, a first contact member that contacts the guide cylinder part and moves when the cover member is located at the open position, a second contact member that contacts the guide cylinder part and moves when the cover member is located at the closed position, and a single spring that urges the first contact member moving at the opened position toward the guide cylinder part and urges the second contact member moving at the closed position toward the guide cylinder part.

## Description

### TECHNICAL FIELD

The present invention relates to a cover opening-closing apparatus in which a cover member is located at an open position or a closed position under guide of a guide groove formed in a base member.

### BACKGROUND ART

For example, various audio instruments are mounted in a center console provided in an interior of an automobile. Since audio instruments can be easily viewed from the outside of the automobile, a cover opening-closing apparatus having a cover member that covers the audio instruments and can be opened and closed has been used.

For example, a cover opening-closing apparatus disclosed in Patent Document 1 includes a storage box provided in a front part of the center console in the interior of the automobile and an audio instrument provided adjacent to the storage box. A cover body that is movable between the storage box and the audio instrument is provided, and the cover body is configured so as to move with a parallel link provided on a side part and cover either the storage box or the audio instrument.

In this manner, the cover body can close either the storage box or the audio instrument, thereby covering it.

### PRIOR ART DOCUMENT

### PATENT DOCUMENT

Patent Document 1: Patent No. 2780892

### DISCLOSURE OF THE INVENTION

### PROBLEMS TO BE SOLVED BY THE INVENTION

The cover body is selectively located at a position for closing the storage box or a position for closing the audio instrument. Disadvantageously, a gap is easily formed between components constituting the cover opening-closing apparatus and vibrations occur on the cover body due to vibrations and shock during driving, thereby generating noise.

To solve such a problem, an object of the present invention is to provide a cover opening-closing apparatus that can suppress vibrations of the opening-closing cover member as much as possible with a simple and economical configuration.

### MEANS TO SOLVE THE PROBLEMS

A cover opening-closing apparatus in accordance with the present invention comprises a base member including a guide groove, a cover member that is provided with a guide part disposed freely movably in the guide groove and is located at an open position or a closed position under guide of the guide groove and the guide part, a first contact member that contacts the guide part and moves when the cover member is located at the opened position, a second contact member that contacts the guide part and moves when the cover member is located at the closed position, and a single urging member that urges the first contact member moving at the opened position toward the guide part and urges the second contact member moving at the closed position toward the guide part.

Preferably, the urging member includes a spring, and one end of the spring contacts the first contact member moving at the open position, while the other end of the spring contacts the second contact member moving at the closed position.

Further, preferably, the base member is attached to a vehicle and the cover member can be freely opened and closed for opening and closing an instrument or a storage part.

### EFFECTS OF THE INVENTION

According to the present invention, when the cover member is located at the open position, the first contact member contacts the guide part and moves and is urged toward the guide part by the urging member. For this reason, the cover member can suppress the vibrations at the closed position, thereby suitably preventing noise.

On the other hand, when the cover member is located at the closed position, the second contact member contacts the guide part and moves and is urged toward the guide part by the urging member. Thus, the cover member can suppress vibrations at the closed position, thereby suitably preventing noise.

Moreover, the single urging member has a function of urging the first contact member toward the guide part and a function of urging the second contact member toward the guide part. As a result, the number of components is reduced, and vibrations of the cover member located at the open position and the closed position can be suppressed as much as possible with a simple and economical configuration.

### BRIEF DESCRIPTION OF THE DRAWINGS

Fig. 1 is a schematic perspective view illustrating a center console into which a cover opening-closing apparatus in accordance with an embodiment of the present invention is incorporated.
Fig. 2 is a partial perspective view illustrating the cover opening-closing apparatus.
Fig. 3 is a view illustrating one side surface of the cover opening-closing apparatus.
Fig. 4 is an exploded perspective view illustrating the one side surface of the cover opening-closing apparatus.
Fig. 5 is a view illustrating the other side surface of the cover opening-closing apparatus.
Fig. 6 is a view illustrating an operation in the case where a cover member is located at an open position.
Fig. 7 is a view illustrating an operation in the case where the cover member is located at a closed position.

### BEST MODE FOR CARRYING OUT THE INVENTION

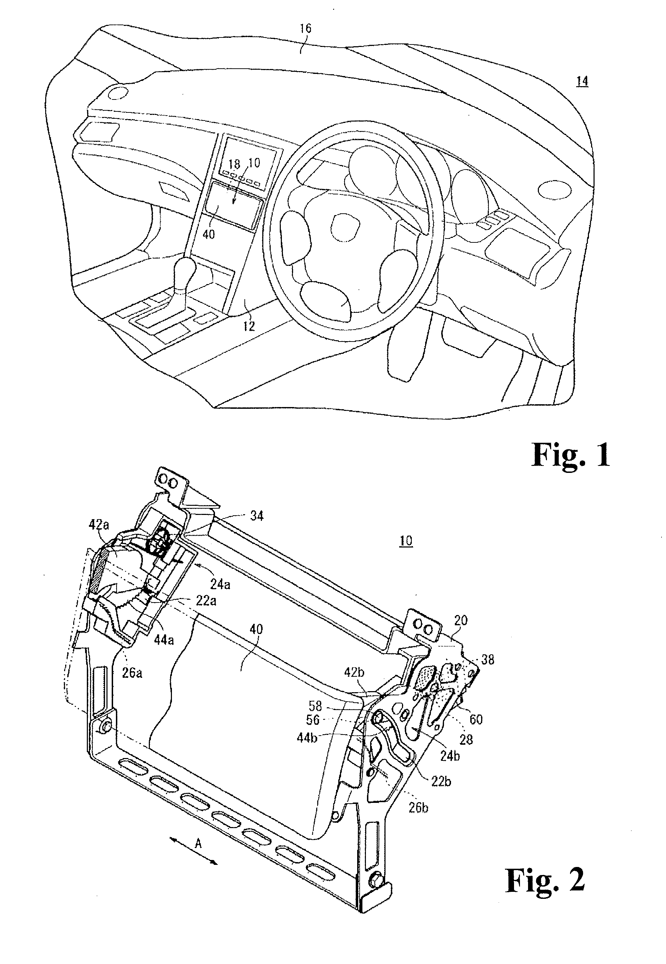

As shown in Fig. 1, a cover opening-closing apparatus 10 in accordance with an embodiment of the present invention is incorporated into a center console 12, and the center console 12 is provided in a vehicle, for example, in an interior 16 of an automobile 14.

Audio instruments 18, such as a radio, a playback device, a CD/MD player, and a DVD player, are mounted in the center console 12. To open and close the audio instruments 18, the cover opening-closing apparatus 10 in accordance with the embodiment is attached to the center console 12. The cover opening-closing apparatus 10 can be also used to open and close various instruments or a storage part in addition to the audio instruments.

The cover opening-closing apparatus 10, as shown in Fig. 2, includes a frame 20 attached to the center console 12. Base members 24a, 24b having guide grooves 22a, 22b, respectively, are fixedly provided on both inner sides of the frame 20 in a direction represented by an arrow A.

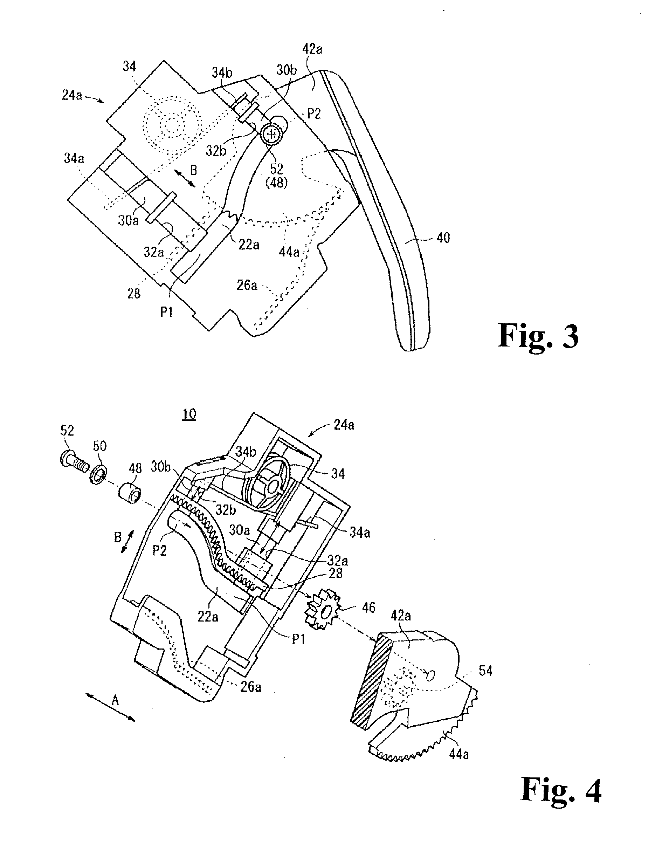

As shown in Fig. 3 and Fig. 4, in the base member 24a, a gear rack 26a extending along the shape of the guide groove 22a is disposed below the guide groove 22a, while a gear rack 28 is disposed in the vicinity of an upper part of the guide groove 22a. A part (lower end) of a first contact member 30a is disposed at a first end position P1 as a closed position of the guide groove 22a, while a part (lower end) of a second contact member 30b is disposed at a second end position P2 as an open position of the guide groove 22a.

The first contact member 30a is slidable along a slide groove 32a formed in the base member 24a in a direction represented by an arrow B, and the second contact member 30b is slidable along a slide groove 32b formed in the base member 24a in the direction represented by the arrow B. An urging member, such as a spring, 34 is attached to the upper part of the base member 24a. One end 34a of the spring 34 extends toward the first contact member 30a, and the other end 34b of the spring 34 extends toward the second contact member 30b.

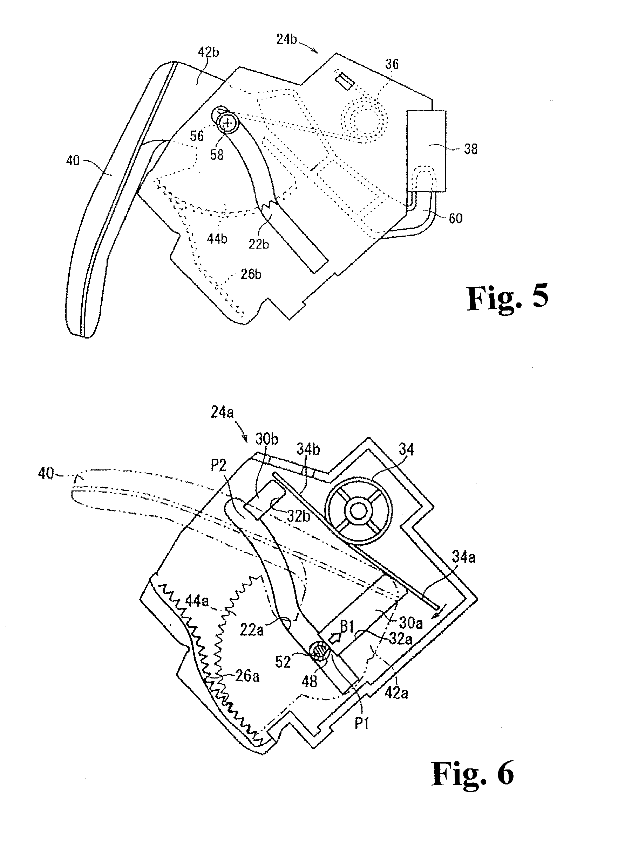

As shown in Fig. 2 and Fig. 5, in the base member 24b, a gear rack 26b extending along the shape of a guide groove 22b is disposed below the guide groove 22b. The base member 24b is provided with a return spring 36 for urging a cover member 40 described later to a closed position and lock means 38 for holding the cover member 40 at the closed position.

The cover member (audio lid) 40 is attached to the base members 24a, 24b so as to be freely opened and closed. As shown in Fig. 2, arm parts 42a, 42b are provided at both ends of the cover member 40 in the direction represented by the arrow A. Arc-like gears 44a, 44b that engage the gear racks 26a, 26b provided on the base members 24a, 24b, respectively, are formed at the arm parts 42a, 42b, respectively.

As shown in Fig. 4, a gear 46 and a guide cylinder part (guide part) 48 are attached to the arm part 42a via a washer 50 and a bolt 52. The gear 46 engages the gear rack 28 provided on the base member 24a, while the guide cylinder part 48 is disposed freely movably in the guide groove 22a. A gear 54 that engages the gear 46 and allows the gear 46 to smoothly roll on the gear rack 28 is attached to the arm part 42a.

As shown in Fig. 6, when the cover member 40 is located at an open position, the guide cylinder part 48 is located at the first end position P1 and contacts with one end of the first contact member 30a. The first contact member 30a slides in a direction represented by an arrow B1 and contacts the one end 34a of the spring 34.

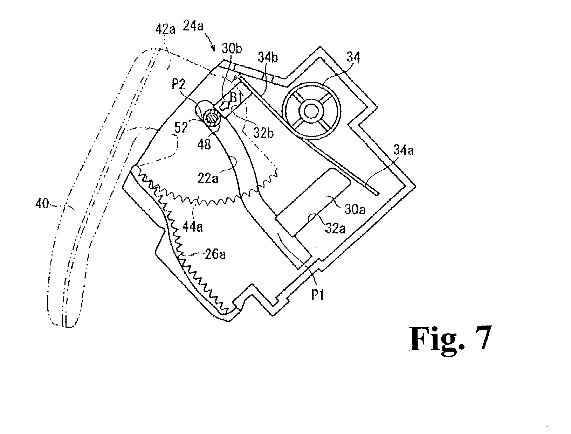

As shown in Fig. 7, when the cover member 40 is located at the closed position, the guide cylinder part 48 is located at the second end position P2 and contacts with one end of the second contact member 30b. The second contact member 30b slides in the direction represented by the arrow B1 and contacts the other end 34b of the spring 34.

As shown in Fig. 2 and Fig. 5, a cylindrical guide part 56 is formed integrally with the arm part 42b, and is inserted into the guide groove 22b of the base member 24b. A washer fixing screw 58 is attached to a front end of the guide part 56 to prevent the guide part 56 from escaping from the guide groove 22b. Since one end of the return spring 36 contacts the guide part 56 and the other end of the return spring 36 engages the base member 24b, the cover member 40 is urged in the open direction by the return spring 36 at all times.

The arm part 42b is provided with a lock operating bar 60. When the cover member 40 is located at the closed position, the lock operating bar 60 engages the lock means 38 and is fixed to the lock means 38. By pressing the cover member 40, locking of the lock operating bar 60 by the lock means 38 is released.

Operations of the cover opening-closing apparatus 10 thus configured will be described below.

Under urging of the return spring 36 in contact with the guide part 56, the cover member 40 is urged toward the opened position at all times. At the open position, as shown in Fig. 6, the guide cylinder part 48 is located at the first end position P1 of the guide groove 22a, allowing the first contact member 30a to contact with an outer circumference of the guide cylinder part 48 to slide in the direction represented by the arrow B1. When the first contact member 30a moves in the direction represented by the arrow B1, the one end 34a of the spring 34 contacts the other end (upper end) of the first contact member 30a and the first contact member 30a is urged toward the guide cylinder part 48.

Thus, in the arm part 42a, since the guide cylinder part 48, the first contact member 30a and the one end 34a of the spring 34 contact with each other, vibrations (backlash) of the cover member 40 under urging of the spring 34 can be prevented.

On the contrary, when the cover member 40 moves to the closed position, an operator presses the cover member 40 toward the closed position. Accordingly, the cover member 40 rolls through the arc-like gears 44a, 44b provided in the arm parts 42a, 42b and the gear racks 26a, 26b engaging with the arc-like gears 44a, 44b, and is rollingly displaced from the open position to the closed position against an elastic force of the return spring 36.

When the cover member 40 rolls to the closed position, the lock operating bar 60 provided in the arm part 42b engages the lock means 38 and is fixed thereto, resulting in that the cover member 40 is held at the closed position. At this time, in the arm parts 42a, 42b, the guide cylinder part 48 and the guide part 56 move in the guide grooves 22a, 22b, thereby allowing the cover member 40 to roll along the shape of the guide grooves 22a, 22b from the opened position to the closed position.

Further, in the arm part 42a, as shown in Fig. 4, the gear 46 engages the gear rack 28. For example, by applying a torque from the gear 54 engaging with the gear 46, the cover member 40 can smoothly roll.

When the cover member 40 reaches the closed position, as shown in Fig. 7, the guide cylinder part 48 is located at the second end position P2 of the guide groove 22a. Accordingly, the guide cylinder part 48 contacts the end of the second contact member 30b, and the second contact member 30b slides in the direction represented by the arrow B1. For this reason, the upper end of the second contact member 30b contacts the other end 34b of the spring 34, so that the second contact member 30b is urged toward the guide cylinder part 48.

The cover member 40 is held at the closed position by the guide cylinder part 48, the second contact member 30b, and the other end 34b of the spring 34 without vibrations (backlash).

When the cover member 40 is located at the closed position, the end of the first contact member 30a faces the guide groove 22a.

When the cover member 40 is rolled from the closed position to the open position, the operator presses a lower end of the cover member 40. Thereby, the lock operating bar 60 operates the lock means 38 to release fixation of the lock operating bar 60. For this reason, under urging of the return spring 36 engaging with the guide part 56, the cover member 40 is rollingly displaced from the closed position to the open position. At this time, since the arc-like gears 44a, 44b roll along the gear racks 26a, 26b, the cover member 40 rolls in a reverse direction to the above-mentioned direction.

In this case, in this embodiment, the cover opening-closing apparatus 10 includes the base member 24a having the guide groove 22a, the cover member 40 provided with the guide cylinder part 48 that is freelymovable in the guide groove 22a, the first contact member 30a that contacts the guide cylinder part 48 and moves when the cover member 40 is located at the opened position, the second contact member 30b that contacts the guide cylinder part 48 and moves when the cover member 40 is located at the closed position, and the single spring 34 that urges the first contact member 30a moving at the opened position toward the guide cylinder part 48 and urges the second contact member 30b moving at the closed position toward the guide cylinder part 48.

Accordingly, as shown in Fig. 6, when the cover member 40 is located at the open position, the first contact member 30a that contacts the guide cylinder part 48 and moves in the direction represented by the arrow B1 is urged toward the guide cylinder part 48 by the spring 34. For this reason, the cover member 40 has the effect of suppressing occurrence of vibrations at the opened position, thereby suitably preventing noise.

On the other hand, as shown in Fig. 7, when the cover member 40 is located at the closed position, the second contact member 30b that contacts the guide cylinder part 48 and moves in the direction represented by the arrow B1 is urged toward the guide cylinder part 48 by the spring 34. For this reason, the cover member 40 can suppress occurrence of vibrations at the closed position, thereby suitably preventing noise.

Moreover, the cover opening-closing apparatus 10 includes the single spring 34, and the one end 34a of the spring 34 urges the first contact member 30a toward the guide cylinder part 48, and the other end 34b urges the second contact member 30b toward the guide cylinder part 48. Thereby, as compared to a configuration in which different urging members are used for the open position and the closed position of the cover member 40, the number of components can be reduced, and vibrations of the opening and closing cover member 40 can be advantageously suppressed as much as possible, thereby preventing noise, with a simple and economical configuration.
Specification, Claims, Drawings and Abstract of Japanese Patent Application No. 2009-234375 filed on October 8, 2009 are wholly cited herein and incorporated as disclosure of the specification of the present invention.

## Claims

1. A cover opening-closing apparatus comprising:
a base member having a guide groove;
a cover member that is provided with a guide part freely movably disposed in the guide groove and is located at an open position or a closed position under guide of the guide groove and the guide part;
a first contact member that contacts with the guide part and moves when the cover member is located at the open position;
a second contact member that contacts the guide part and moves when the cover member is located at the closed position; and
a single urging member that urges the first contact member moving at the open position toward the guide part and urges the second contact member moving at the closed position toward the guide part.

2. The cover opening-closing apparatus according to claim 1, wherein the urging member includes a spring; and
one end of the spring contacts the first contact member moving at the opened position, while the other end of the spring contacts the second contact member moving at the closed position.

3. The cover opening-closing apparatus according to claim 1 or 2, wherein the base member is attached to a vehicle; and
the cover member is freely opened and closed for opening-closing an instrument or a storage part.
